# EUROPÄISCHE PATENTSCHRIFT

(11) **EP 1 954 467 B1**
(45) Veröffentlichungstag und Bekanntmachung des Hinweises auf die Patenterteilung: **15.09.2010**
(21) Anmeldenummer: 07786012.0
(22) Anmeldetag: 12.07.2007
(51) Int. Cl.: B29C 45/04, B29C 45/16

(54) **SPRITZGIESSMASCHINE**
INJECTION MOULDING MACHINE
PRESSE D'INJECTION

(30) Priorität: 28.07.2006 DE 102006034919
(43) Veröffentlichungstag der Anmeldung: 13.08.2008
(73) Patentinhaber: Ferromatik Milacron Maschinenbau GmbH, D-79364 Malterdingen (DE)
(72) Erfinder: WESSOLLECK, Georg, 79364 Malterdingen (DE)
(74) Vertreter: Grättinger Möhring von Poschinger Patentanwälte Partnerschaft
(86) Internationale Anmeldenummer: PCT/EP2007/006180
(87) Internationale Veröffentlichungsnummer: WO 2008/011991

(56) Entgegenhaltungen:
- EP-A- 1 226 916
- WO-A-02/04186
- JP-A- 6 254 906
- JP-A- 62 060 618
- US-A- 5 773 049

## Beschreibung

Die vorliegende Erfindung betrifft eine Spritzgießmaschine umfassend eine feststehende und eine in Längsrichtung der Maschine bewegbare Formaufspannplatte, einen zwischen den Formaufspannplatten angeordneten Mittelblock mit einem ersten und einem zweiten in Längsrichtung der Maschine bewegbaren Lagerteil und einem in den beiden Lagerteilen um eine quer zu Längsachse verlaufende Drehachse drehbar gelagerten Werkzeugblock, eine auf die bewegbare Formaufspannplatte wirkende Schließeinheit, mindestens eine Spritzeinheit und eine die Schließeinheit und die Spritzeinheit steuernde Steuerung.

Eine derartige Spritzgießmaschine ist beispielsweise durch offenkundige Vorbenutzung (Spritzgießmaschinen der "K-TEC"-Baureihe mit Etagen-Wendetechnik der Ferromatik Milacron Maschinenbau GmbH, Malterdingen) sowie durch die JP 62060618 A bekannt. Der Werkzeugblock umfaßt typischerweise mehrere Teilwerkzeuge, die im Rahmen einer Mehrkomponenten-Spritzgießtechnik (bezogen auf das einzelne Spritzgießerzeugnis) nacheinander mit den auf der feststehenden und der bewegbaren Formaufspannplatte aufgespannten Teilwerkzeugen zur Bildung entsprechender Spritzgießkavitäten unterschiedlicher Gestalt zusammenwirken, insbesondere um zunächst ein Zwischenprodukt und in einem zweiten Schritt ein Endprodukt zu spritzen. Bei einer entsprechenden Ausführung der Maschine sind in bekannter Weise auch Mehrkomponentenverfahren mit mehr als zwei Verfahrensstufen realisierbar.

Einen insoweit im wesentlichen vergleichbaren Stand der Technik bildet die EP 1226916 A1. Auch die US 5,773,049 offenbart eine Spritzgießmaschine, bei der im Hinblick auf die Durchführung mehrstufiger Spritzgießverfahren zwischen der feststehenden und der bewegbaren Formaufspannplatte ein Mittelblock mit einem drehbaren Werkzeugblock vorgesehen ist. Dieser ist allerdings in einem ihn ringförmig umschließenden einheitlichen Rahmen drehbar gelagert.

Bekannt (z.B. aus der DE 102004050311 A1) sind weiterhin Spritzgießmaschinen, die sich von den eingangs genannten dadurch unterscheiden, daß der Mittelblock lediglich ein (unteres) Lagerteil umfaßt, auf dem der Werkzeugblock drehbar gelagert ist.

Um den Werkzeugblock von einer Stellung - z.B. um 90° oder 180° - in die nächste drehen zu können, müssen sowohl die bewegbare Formaufspannplatte von dem Werkzeugblock als auch der Werkzeugblock von der feststehenden Formaufspannplatte abgehoben sein. Vor diesem Hintergrund wird für die Bewegung des Mittelblocks verbreitet dessen (insbesondere mechanische, über Zahnstangen realisierte) Zwangskoppelung an die bewegbare Formaufspannplatte eingesetzt, wodurch erreicht wird, daß sich der Mittelblock stets gleichgerichtet mit der bewegbaren Formaufspannplatte bewegt, und zwar mit einem bestimmten vorgegebenen Geschwindigkeitsverhältnis (typischerweise etwa mit der Hälfte der Geschwindigkeit der bewegbaren Formaufspannplatte). Nachteilig hieran ist eine teilweise unerwünscht lange Zyklusdauer, beispielsweise indem der zwischen der bewegbaren Formaufspannplatte und dem Werkzeugblock definierte Formhohlraum (trotz ausreichender Aushärtung des dort gespritzten Endprodukts) noch nicht geöffnet werden kann, um das fertige Spritzgießteil auszuwerfen, solange das in dem zwischen der feststehenden Formaufspannplatte und dem Werkzeugblock definierten anderen Formhohlraum gespritzte Zwischenprodukt noch nicht ausreichend ausgehärtet ist.

Um diesen Nachteil zu umgehen, ist weiterhin bekannt, die Bewegung des Mittelblocks von derjenigen der bewegbaren Formaufspannplatte abzukoppeln, indem eine eigenständige, allein die Bewegung des Mittelblocks bewerkstelligende Antriebseinheit vorgesehen wird (vgl. DE 102004050311 A1, EP 1226916 A1, JP 62060618 A sowie die weiter oben bereits definierte offenkundige Vorbenutzung); so wird nach der EP 1226916 A1 und der JP 62060618 A der Mittelblock über Hydraulikzylinder bewegt, die sich an der feststehenden Formaufspannplatte abstützen. Dies gestattet, die Möglichkeiten der Optimierung des gesamten Spritzzyklus' auszuschöpfen. Allerdings ist bei solchen Spritzgießmaschinen der mit der zusätzlichen Antriebseinheit für den Mittelblock verbundene apparative Aufwand nachteilig, zumal die Antriebseinheit, um die vorstehend dargelegte Prozeßführung optimieren zu können, so ausgelegt sein muß, daß sie unabhängig von der Schließeinheit ein sicheres Schließen bzw. Zuhalten des Werkzeugblocks und des auf der feststehenden Formaufspannplatte montierten Teilwerkzeugs gewährleistet.

Die aus der US 5,773,049 bekannte Spritzgießmaschine verfügt demgegenüber über keinen isolierten, eigenständigen Antrieb, der allein der Bewegung des Mittelblocks dient. Denn hier kann der Rahmen des Mittelblocks über Klemmelemente lösbar auf die längs der Maschinenachse verfahrbaren Zylinderbauteile von Hydraulikzylindern geklemmt werden, deren Kolbenstangen fest mit der feststehenden Formaufspannplatte verbunden sind und die auch dem Verfahren der bewegbaren Formaufspannplatte dienen, zu welchem Zweck die bewegbare Formaufspannplatte ebenfalls über Klemmelemente lösbar auf jene Zylinderbauteile geklemmt werden kann.

Im Lichte des aufgezeigten Standes der Technik liegt der vorliegenden Erfindung die Aufgabe zugrunde, eine Spritzgießmaschine der eingangs angegebenen Art zu schaffen, die sich bei einem geringen apparativen Aufwand um gegenüber einer Zwangskoppelung des Mittelblocks an die bewegbare Formaufspannplatte erweiterte Möglichkeiten der Optimierung der Prozeßführung auszeichnet.

Gelöst wird diese Aufgabenstellung gemäß der vorliegenden Erfindung, indem mindestens dem ersten Lagerteil des Mittelblockes mindestens ein von der Steuereinheit betätigbares erstes Klemmelement zugeordnet ist, das in eine Klemmstellung, in der es an einer fest mit der bewegbaren Formaufspannplatte verbundenen, sich in Längsrichtung der Maschine erstreckenden Zugstange angreift und das erste Lagerteil mit der bewegbaren Formaufspannplatte gekoppelt zusammen mit dieser verfahrbar ist, und in eine Öffnungsstellung, in der die bewegbare Formaufspannplatte bei nicht-bewegtem erstem Lagerteil verfahrbar ist, schaltbar ist. Die erfindungsgemäße Spritzgießmaschine zeichnet sich mit anderen Worten dadurch aus, daß das erste Lagerteil des Mittelblocks mittels des diesem zugeordneten mindestens einen ersten Klemmelements, welches durch die Steuerung betätigt einerseits in eine Klemmstellung und andererseits in eine Öffnungsstellung einnehmen kann, wahlweise - bei geklemmtem Klemmelement - an die Bewegung der bewegbaren Formaufspannplatte koppelbar oder aber - bei gelöstem Klemmelement - von dieser abkoppelbar ist. Hierzu greift das genannte Klemmelement in seiner geklemmten Stellung an einem mit der bewegbaren Formaufspannplatte verbundenen, gemeinsam mit dieser bewegten Bauteil der Spritzgießmaschine an, nämlich an einer fest mit der bewegbaren Formaufspannplatte verbundenen, sich in Längsrichtung der Maschine erstreckenden Zugstange, so daß die Zugstange, solange das Klemmelement geklemmt ist, das erste Lagerteil bei der Bewegung der bewegbaren Formaufspannplatte mitnimmt und synchron und mit gleicher Geschwindigkeit wie letztere bewegt. Umgekehrt ist bei geöffnetem erstem Klemmelement möglich, die bewegbare Formaufspannplatte zu verfahren, ohne bei dieser Bewegung das erste Lagerteil mitzunehmen. Insbesondere kann auf diese Weise - ohne einen gesonderten Antrieb für den Mittelblock, allein durch entsprechende Betätigung des ersten Klemmelements - beispielsweise der zwischen der bewegbaren Formaufspannplatte und dem Werkzeugblock definierte Formhohlraum (während eines ersten Teils der Öffnungsbewegung der bewegbaren Formaufspannplatte) geöffnet werden, um das fertige Spritzgießteil bereits auszuwerfen, obwohl der zwischen der feststehenden Formaufspannplatte und dem Werkzeugblock definierte andere Formhohlraum zur Aushärtung des dort gespritzten Zwischenprodukts noch geschlossen ist. Der Werkzeugblock wird dann erst später, nämlich während eines zweiten Teils der Öffnungsbewegung der bewegbaren Formaufspannplatte von der feststehenden Formaufspannplatte abgehoben, um den Werkzeugblock drehen zu können.

Grundsätzlich läßt sich die vorliegende Erfindung bereits realisieren, wenn lediglich einem Lagerteil, dem ersten Lagerteil, mindestens ein Klemmelement mit der vorstehend dargelegten Funktionalität zugeordnet, d.h. insbesondere an diesem angeordnet ist. Das mindestens eine erste Klemmelement bzw. die ersten Klemmelemente stellt/stellen in diesem Falle das einzige bzw. die einzigen Klemmelemente dar; und ein - dem zweiten Lagerteil zugeordnetes - zweites Klemmelement bzw. zweite Klemmelemente sind nicht vorgesehen. Besonders vorteilhaft ist es indessen, wenn sowohl dem ersten Lagerteil mindestens ein (erstes) Klemmelement als auch dem zweiten Lagerteil mindestens ein (zweites) Klemmelement zugeordnet sind. Dies wirkt sich günstig auf die Präzision und Reproduzierbarkeit aus und trägt überdies zu einer Reduzierung der über die einzelnen Klemmelemente zu übertragenden Kräfte bei.

Eine andere bevorzugte Weiterbildung der Erfindung zeichnet sich dadurch aus, daß mindestens einem Lagerteil ein von der Steuereinheit betätigbares Arretierelement zugeordnet ist, das in eine Sperrstellung, in der das betreffende Lagerteil relativ zu der feststehenden Formaufspannplatte fixiert lagegesichert ist, und in eine Losstellung, in der das betreffende Lagerteil relativ zu der feststehenden Formaufspannplatte bewegbar ist, schaltbar ist. Ein solches (bevorzugt an der feststehenden Formaufspannplatte angeordnetes) Arretierelement ist günstig im Hinblick auf eine präzise Steuerung der Bewegung des betreffenden Lagerteils. Beispielsweise kann bei dem weiter oben aufgezeigten Bewegungsablauf das Arretierelement während des ersten Teils der Öffnungsbewegung der bewegbaren Formaufspannplatte gesperrt werden, um eine (z.B. durch Reibungseffekte bedingte) Mitnahme des Lagerteils mit der bewegbaren Formaufspannplatte sicher auszuschließen. Ferner kann ein solches Arretierelement mit vergleichsweise geringem technischen Aufwand sicherstellen, daß die (auch) zwischen dem Werkzeugblock und dem auf die feststehende Formaufspannplatte montierten Teilwerkzeug durch die Schließeinheit initiierte Schließkraft im wesentlichen erhalten bleibt, auch wenn die bewegbare Formaufspannplatte aufgrund einer entsprechenden Betätigung der Schließeinheit bereits in Richtung "öffnen" verfahren wird.

Gemäß einer wiederum anderen bevorzugten Weiterbildung der Erfindung ist vorgesehen, daß die beiden Lagerteile des Mittelblocks unabhängig voneinander verfahrbar sind. Insbesondere kann zu diesem Zweck dem zweiten Lagerteil des Mittelblocks mindestens ein - ebenfalls von der Steuereinheit betätigbares - zweites Klemmelement zugeordnet sein, das unabhängig von dem mindestens einen dem ersten Lagerteil zugeordneten ersten Klemmelement in eine Klemmstellung, in der das zweite Lagerteil mit der bewegbaren Formaufspannplatte gekoppelt zusammen mit dieser verfahrbar ist, und in eine Öffnungsstellung, in der die bewegbare Formaufspannplatte bei nicht-bewegtem zweitem Lagerteil verfahrbar ist, schaltbar ist. Besonders bevorzugt sind in diesem Falle beiden Lagerteilen von der Steuereinheit betätigbare Arretierelemente (s.o.) zugeordnet, die jeweils in eine Sperrstellung, in der das betreffende Lagerteil relativ zu der feststehenden Formaufspannplatte fixiert lagegesichert ist, und in eine Losstellung, in der das betreffende Lagerteil relativ zu der feststehenden Formaufspannplatte bewegbar ist, schaltbar sind.

Ein herausragender Vorteil einer solchen unabhängigen Bewegbarkeit der beiden Lagerteile besteht darin, daß der Werkzeugblock bei zueinander - in Längsrichtung der Maschine - versetzt angeordneten Lagerteilen in Richtung seiner Drehachse montierbar und demontierbar ausgeführt sein kann. Dies stellt eine erhebliche Erleichterung des Werkzeugwechsels gegenüber bekannten Konstruktionen dar, was zu einer nennenswerten Verkürzung der für die Umrüstung der Maschine benötigten Zeit führen kann. In diesem Zusammenhang kann im Einzelfall besonders günstig sein, wenn die dem Mittelblock zugeordneten Teilwerkzeuge unmittelbar in den Werkzeugblock eingearbeitet sind, d.h. einen integralen Bestandteil des Werkzeugblocks bilden. Die durch den einfachen Austausch (s.o.) des gesamten Werkzeugblocks mögliche Umrüstung des Mittelblocks läßt die erforderlichen Rüstzeiten auf ein Minimum sinken. Ersichtlich weist die vorliegende Erfindung indessen ebenfalls bedeutende Vorteile gegenüber dem Stand der Technik auf, wenn der Werkzeugblock in bekannter Weise einen Werkzeugträger mit mehreren Formaufspannflächen, auf welchen separate Teilwerkzeuge montiert werden können, umfaßt.

Wenngleich die spezifischen Vorteile der vorstehend erläuterten unabhängigen Verfahrbarkeit der beiden Lagerteile des Mittelblocks in besonderer Weise zum Tragen kommen, wenn die beiden Lagerteile im Sinne der vorliegenden Erfindung und ohne gesonderte Antriebsaggregate allein mittels der gesteuerten Klemmelemente bewegbar sind, so läßt sich eben diese unabhängige Verfahrbarkeit der beiden Lagerteile des Mittelblocks erkennbar mit Vorteil auch bei solchen Spritzgießmaschinen einsetzen, bei denen für die Bewegung des Mittelblocks gesonderte Antriebsaggregate vorgesehen sind. Sie stellt einen eigenen Erfindungsgesichtspunkt dar, für den sich die Anmelderin vorbehält, auf dem Wege einer Teilanmeldung oder auf sonstige geeignete Weise isoliert Schutz zu beanspruchen.

Weiterhin ist aus der vorstehenden Erläuterung der'vorliegenden Erfindung erkennbar, daß sich das Prinzip der Bewegung des Mittelblocks als eine über steuerbare Klemmelemente an die Bewegung der bewegbaren Formaufspannplatte koppelbare Mitnahme mit entsprechenden Vorteilen auch bei solchen Spritzgießmaschinen (vgl. DE 102004050311 A1) anwenden läßt, bei denen - unter Inkaufnahme von Nachteilen bzw. Beschränkungen hinsichtlich der Zuführung von Schmelze zu dem Werkzeugblock - der Mittelblock lediglich ein Lagerteil umfaßt. Die Anmelderin behält sich aus diesem Grund vor, auch für solche auf der Anwendung des erfindungsgemäßen Prinzips beruhende Spritzgießmaschinen mit nur einem Lagerteil für den Werkzeugblock Schutz zu beanspruchen, beispielsweise durch Ausdehnung der Ansprüche der vorliegenden Anmeldung, durch eine Teilanmeldung oder auf eine sonstige geeignete Weise.

Weitere besondere Aspekte und Vorteile der vorliegenden Erfindung werden aus der nachstehenden Erläuterung eines bevorzugten, in der Zeichnung veranschaulichten Ausführungsbeispiels der Erfindung ersichtlich. Dabei zeigt
- Fig. 1: in schematischer Seitenansicht den hier maßgebli- chen Bereich einer Spritzgießmaschine während des Teilzyklus' Maschine öffnen,
- Fig. 2: in schematischer Seitenansicht den hier maßgebli- chen Bereich einer Spritzgießmaschine während des Teilzyklus' Maschine schließen,
- Fig. 3: in schematischer Seitenansicht den hier maßgebli- chen Bereich einer Spritzgießmaschine während des Ausbaus des Werkzeugblocks und
- Fig. 4: in schematischer Seitenansicht den hier maßgebli- chen Bereich einer Spritzgießmaschine während des Einbaus des Werkzeugblocks.

Die in sämtlichen Figuren der Zeichnung im Umfang der hier interessierenden Komponenten gezeigte Spritzgießmaschine umfaßt eine feststehende Formaufspannplatte 1 und eine in Längsrichtung A der Maschine bewegbare Formaufspannplatte 2. Eine auf die bewegbare Formaufspannplatte 2 wirkende Schließeinheit 3 umfaßt vier hydraulische Kolben-Zylinder-Einheiten 4, deren Zylinder 5 sich an der feststehenden Formaufspannplatte 1 abstützen und deren Kolben 6 als Zugstangen 7 ausgeführt sind, mit denen die bewegbare Formaufspannplatte 2 fest verbunden ist.

Die Spritzgießmaschine ist zur Herstellung von Spritzgußteilen nach einem Mehrkomponentenverfahren ausgeführt. Hierzu ist zwischen den beiden Formaufspannplatten 1 und 2 ein Mittelblock 8 angeordnet. Dieser umfaßt ein erstes, oberes Lagerteil 9, welches auf den beiden oberen Zugstangen 7a in Längsrichtung A der Maschine bewegbar geführt ist, ein zweites, unteres Lagerteil 10, welches auf den beiden unteren Zugstangen 7b ebenfalls in Längsrichtung A der Maschine bewegbar geführt ist, und einen in den beiden Lagerteilen 9 und 10 um eine vertikale Drehachse 11 drehbar gelagerten Werkzeugblock 12. Auf den Werkzeugblock 12 wirkt (in als solches bekannter Weise) ein - nicht dargestellter - Drehantrieb. Der Werkzeugblock 12, in den die zugeordneten Teilwerkzeuge unmittelbar eingearbeitet sind, definiert mit dem auf der feststehenden Formaufspannplatte 1 montierten Teilwerkzeug 13 einen zur Herstellung eines Zwischenprodukts bestimmten ersten Formhohlraum und mit dem auf der bewegbaren Formaufspannplatte 2 montierten Teilwerkzeug 14 einen zur Herstellung des Endprodukts bestimmten zweiten Formhohlraum.

Nicht dargestellt, da vorliegend nicht von spezifischer Bedeutung, sind weitere übliche Komponenten einer Spritzgießmaschine wie insbesondere das Maschinenbett, die Spritzeinheit(en) sowie die Steuereinheit.

In dem vorstehend beschriebenen Umfang entspricht die in der Zeichnung veranschaulichte Spritzgießmaschine dem hinlänglich bekannten Stand der Technik, so daß weitere, detaillierte Ausführungen entbehrlich sind.

Dem ersten Lagerteil 9 des Mittelblocks 8 sind zwei von der Steuereinheit betätigbare erste Klemmelemente 15 zugeordnet; sie sind an dem ersten Lagerteil 9 angeordnet. In entsprechender Weise sind dem zweiten Lagerteil 10 des Mittelblocks 8 zwei von der Steuereinheit (unabhängig von den beiden dem ersten Lagerteil 9 zugeordneten ersten Klemmelementen 15) betätigbare zweite Klemmelemente 16 zugeordnet, die an dem zweiten Lagerteil 10 angeordnet sind. Die ersten und zweiten Klemmelemente 15 und 16 sind jeweils mittels der Steuereinheit in eine Klemmstellung und in eine Öffnungsstellung schaltbar. In der Klemmstellung ist das betreffende Klemmelement auf die zugeordnete Zugstange geklemmt und auf diese Weise das betreffende Lagerteil 9 bzw. 10 mit den zugeordneten Zugstangen 7a bzw. 7b und somit mittelbar mit der bewegbaren Formaufspannplatte 2 gekoppelt und zusammen mit dieser verfahrbar. In der Öffnungsstellung ist indessen das betreffende Lagerelement 9 bzw. 10 von den zugeordneten Zugstangen 7a bzw. 7b abgekoppelt und somit die bewegbare Formaufspannplatte 2 bei nicht-bewegtem erstem bzw. zweiten Lagerteil verfahrbar.

Weiterhin ist beiden Lagerteilen 9 und 10 jeweils ein von der Steuereinheit betätigbares Arretierelement 17 bzw. 18 zugeordnet. Beide Arretierelemente, die an der feststehenden Formaufspannplatte 1 angebracht sind und jeweils einen mit dem betreffenden Lagerteil 9 bzw. 10 verrastbaren Riegel aufweisen, sind in eine Sperrstellung und in eine Losstellung schaltbar. In der Sperrstellung koppelt das betreffende Arretierelement 17 bzw. 18 das zugeordnete Lagerteil 9 bzw. 10 fest an die feststehende Formaufspannplatte 1. In der Losstellung des zugeordneten Arretierelements ist indessen das betreffende Lagerteil 9 bzw. 10 relativ zu der feststehenden Formaufspannplatte bewegbar.

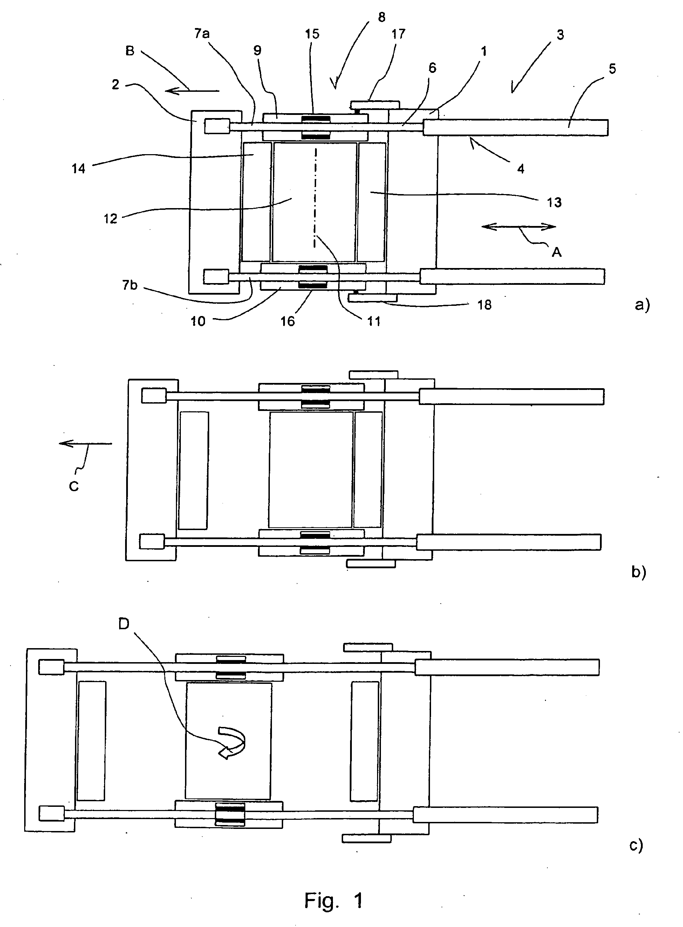

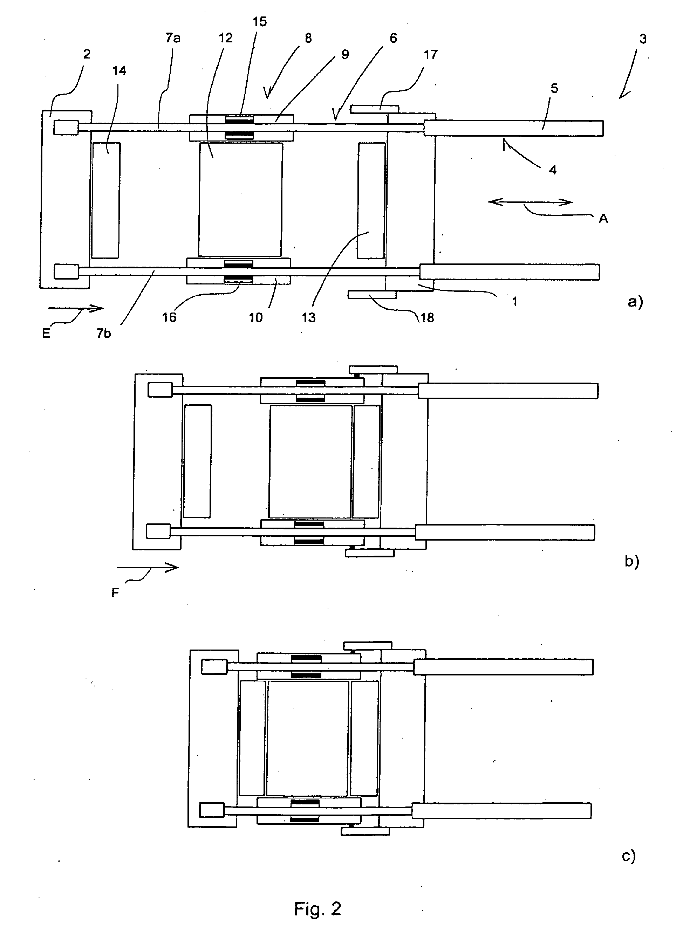

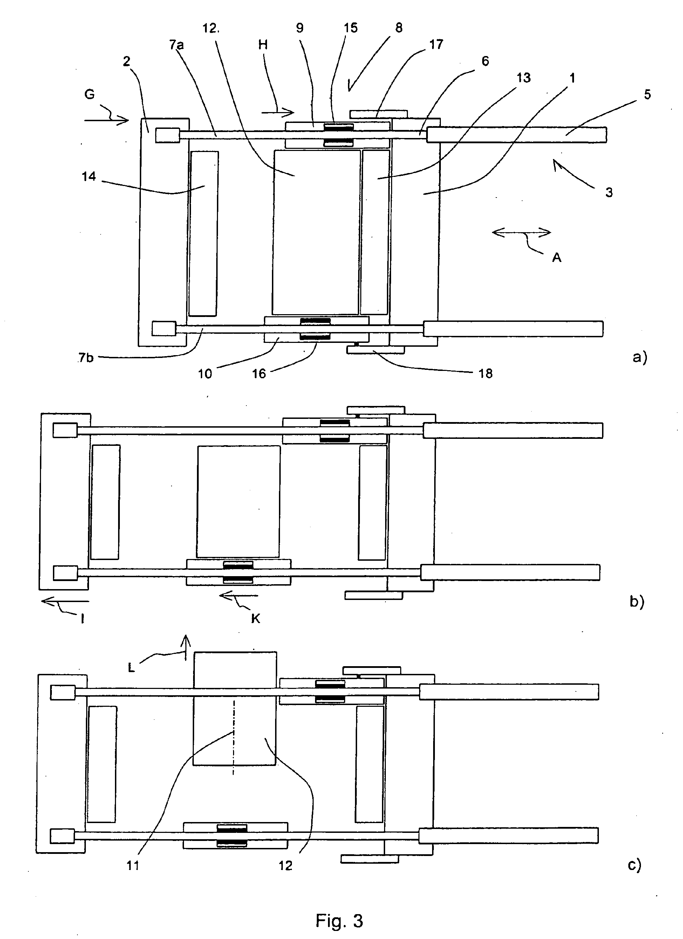

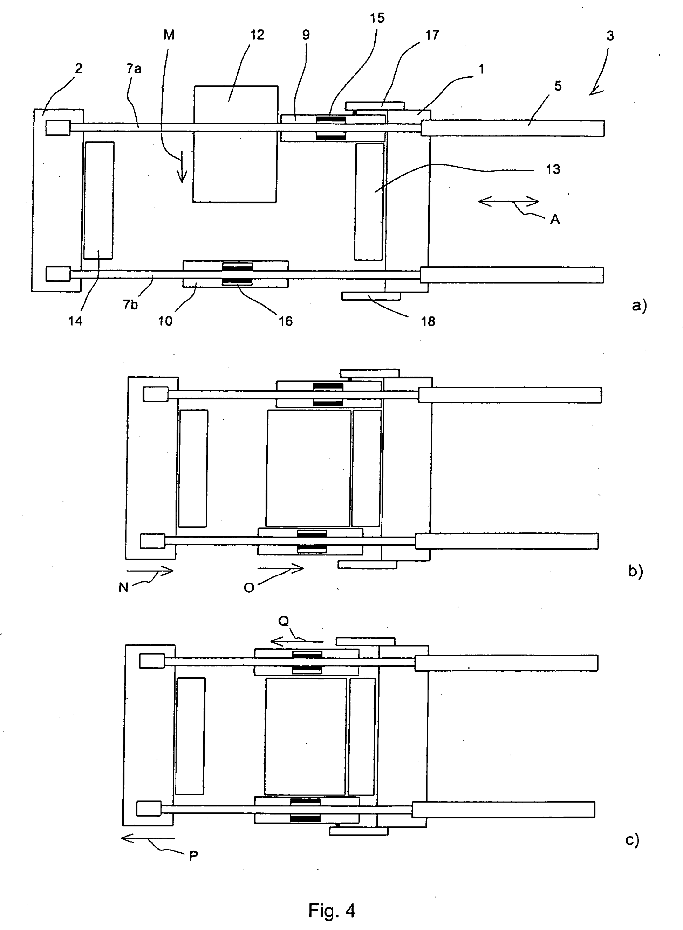

Zur Verdeutlichung der durch diese Gestaltung bereitgestellten Möglichkeiten zeigen die Figuren 1 und 2 das Öffnen und Schließen der Maschine, wobei der Werkzeugblock 12 bei geöffneter Maschine gedreht wird, und die Figuren 3 und 4 den Werkzeugwechsel durch Austausch des Werkzeugblocks 12.

Fig. 1a) zeigt die geschlossene, Fig. 1b) die teilweise geöffnete und Fig. 1c) die vollständig geöffnete Spritzgießmaschine. Während der ersten Teilbewegung des Öffnens der Maschine (von Fig. 1a) nach Fig. 1b)) sind die beiden ersten Klemmelemente 15 des ersten Lagerteils 9 wie auch die beiden zweiten Klemmelemente 16 des zweiten Lagerteils 10 geöffnet, die beiden Arretierelemente 17 und 18 indessen gesperrt, so daß die bewegbare Formaufspannplatte 2 verfahren werden kann (Pfeil B), ohne daß der Mittelblock 8 mitbewegt wird. In der teilweise geöffneten Stellung der Maschine (Fig. 1b)), in der beispielsweise das in dem zwischen dem Werkzeugblock 12 und dem auf der bewegbaren Formaufspannplatte 2 montierten Teilwerkzeug 14 angeordneten Formhohlraum gespritzte Fertigprodukt ausgeworfen werden kann, werden die ersten und zweiten Klemmelemente 15 und 16 geklemmt, die Arretierelemente 17 und 18 indessen in ihre Losstellung geschaltet, so daß bei einer Fortsetzung der Bewegung der bewegbaren Formaufspannplatte (Pfeil C) der Mittelblock 8 mitgenommen wird. In der vollständig geöffneten Stellung der Maschine (Fig. 1c)) kann der Werkzeugblock 12 gedreht werden (Pfeil D).

Fig. 2 veranschaulicht die prinzipiell umgekehrt verlaufende Schließbewegung, wobei Fig. 2a) die geöffnete, Fig. 2b) die teilweise geschlossene und Fig. 2c) die vollständig geschlossene Spritzgießmaschine zeigt. Während der ersten Teilbewegung des Schließens der Maschine (von Fig. 2a) nach Fig. 2b)) sind die beiden ersten Klemmelemente 15 des ersten Lagerteils 9 wie auch die beiden zweiten Klemmelemente 16 des zweiten Lagerteils 10 geklemmt, so daß bei der entsprechenden Bewegung der bewegbaren Formaufspannplatte 2 (Pfeil E) der Mittelblock 8 bis zur Anlage des Werkzeugblocks 12 an dem Teilwerkzeug 13 mitgenommen wird. In dieser Stellung werden die beiden Arretierelemente 17 und 18 gesperrt, die ersten und zweiten Klemmelemente 15 und 16 indessen geöffnet, so daß die bewegbare Formaufspannplatte 2 während des zweiten Teils (von Fig. 2b) nach Fig. 2c)) der Schließbewegung (Pfeil F) ungehindert verfahren werden kann, bis das Teilwerkzeug 14 an dem Werkzeugblock 12 anliegt (Fig. 2c)).

Erkennbar werden beim Öffnen und Schließen der Maschine die dem ersten Lagerteil 9 zugeordneten ersten Klemmelemente 15 und die dem zweiten Lagerteil 10 zugeordneten zweiten Klemmelemente 16 synchron betätigt. Das gleiche gilt für die den beiden Lagerteilen 9 und 10 zugeordneten Arretierelemente 17 und 18.

Anders verhält es sich beim Aus- und Einbau des Werkzeugblocks 12, wie er in den Fig. 3 bzw. 4 schematisch veranschaulicht ist.

Ausgangsstellung für den Werkzeugausbau (Fig. 3) ist die teilweise geöffnete Stellung der Maschine, bei der, wie in den Fig. 1b) und 2b) gezeigt, der Werkzeugblock 12 an dem auf der feststehenden Formaufspannplatte 1 montierten Teilwerkzeug 13 anliegt. In dieser Stellung werden die dem ersten, oberen Lagerteil 9 zugeordneten ersten Klemmelemente 15 geklemmt und das diesem Lagerteil zugeordnete Arretierelement 17 in seine Losstellung gebracht. Umgekehrt werden die dem zweiten, unteren Lagerteil 10 zugeordneten zweiten Klemmelemente 16 gelöst und das diesem Lagerteil zugeordnete Arretierelement 18 gesperrt. Sodann wird die Schließeinrichtung 3 betätigt, um die bewegbare Formaufspannplatte 2 um ein vorgegebenes Maß in Richtung auf die feststehende Formaufspannplatte zu bewegen (Pfeil G). Infolge seiner über die geklemmten ersten Klemmelemente 15 hergestellten Verbindung mit den oberen Zugstangen 7a folgt das erste Lagerteil 9 dieser Bewegung (Pfeil H), wodurch die entsprechend gestaltete rastende Lagerung des (festgehaltenen) Werkzeugblockes 12 in dem ersten Lagerteil 9 ausrastet.

Als nächstes werden das erste Lagerteil 9 durch Sperren des zugeordneten Arretierelements 17 lagegesichert, die ersten Klemmelemente 15 gelöst, die zweiten Klemmelemente 16 geklemmt und das dem zweiten Lagerteil 10 zugeordnete Arretierelement 18 in seine Losstellung gebracht. Wird nun die Maschine durch Verfahren (Pfeil I) der bewegbaren Formaufspannplatte 2 mittels der Schließeinrichtung 3 weiter geöffnet (von Fig. 3a) zu Fig. 3b)), so folgt der Werkzeugblock 12 infolge seiner über die geklemmten zweiten Klemmelemente 16 hergestellten Verbindung mit den unteren Zugstangen 7b dieser Bewegung (Pfeil K), wodurch der Werkzeugblock unter dem ersten Lagerteil 9 heraustritt. Bei geöffneter Maschine (Fig. 3c)) kann der Werkzeugblock 12 nach oben von dem zweiten Lagerteil 10 abgenommen und der Maschine nach oben hin, d.h. in Richtung seiner Drehachse 11 entnommen werden (Pfeil L).

Diese Stellung der Maschine bildet den Ausgangspunkt (Fig. 4a)) des prinzipiell umgekehrt verlaufenden Werkzeugeinbaus, wie er in Fig. 4 veranschaulicht ist.

Der Werkzeugblock 12 wird von oben her auf das zweite Lagerteil 10 aufgesetzt (Pfeil M) unter Herstellung der drehbaren Lagerung des Werkzeugblocks in dem genannten Lagerteil. Weiterhin sind, wie weiter oben im Zusammenhang mit dem Werkzeugausbau beschrieben, die dem ersten, oberen Lagerteil 9 zugeordneten ersten Klemmelemente 15 gelöst, das diesem Lagerteil zugeordnete Arretierelement 17 in seiner Sperrstellung, die dem zweiten, unteren Lagerteil 10 zugeordneten zweiten Klemmelemente 16 geklemmt und das diesem Lagerteil zugeordnete Arretierelement 18 in seiner Losstellung. Sodann wird die Schließeinrichtung 3 betätigt, um die bewegbare Formaufspannplatte 2 in Richtung auf die feststehende Formaufspannplatte zu verfahren (Pfeil N). Infolge seiner über die geklemmten zweiten Klemmelemente 16 hergestellten Verbindung mit den unteren Zugstangen 7b folgt das zweite Lagerteil 10 dieser Bewegung und nimmt den Werkzeugblock 12 mit(Pfeil O). Diese Bewegung endet, wenn der Werkzeugblock an dem auf der feststehenden Formaufspannplatte 1 montierten Teilwerkzeug 13 anliegt (Fig. 4b)).

In dieser Stellung werden die ersten Klemmelemente 15 geklemmt und das dem ersten Lagerteil 9 zugeordnete Arretierelement 17 in seine Losstellung gebracht. Umgekehrt werden die zweiten Klemmelemente 16 gelöst und das dem zweiten Lagerteil 10 zugeordnete Arretierelement 18 gesperrt. Sodann wird die Schließeinrichtung 3 betätigt, um die bewegbare Formaufspannplatte 2 um ein vorgegebenes Maß in Richtung von der feststehenden Formaufspannplatte 1 weg zu bewegen (Pfeil P). Infolge seiner über die geklemmten ersten Klemmelemente 15 hergestellten Verbindung mit den oberen Zugstangen 7a folgt das erste Lagerteil 9 dieser Bewegung (Pfeil Q), wodurch die entsprechend gestaltete rastende Lagerung des (festgehaltenen) Werkzeugblockes 12 in dem ersten Lagerteil 9 einrastet (Fig. 4c)). Die Maschine ist hernach (mit dem neuen Werkzeugblock 12) wieder einsatzbereit Ersichtlich gestattet die technische Möglichkeit, die beiden Lagerteile 9 und 10 des Mittelblockes 8 unabhängig voneinander zu verfahren, einen besonders einfachen Wechsel des Werkzeugblocks 12. Die Drehlagerung der Werkzeugblocks 12 in den beiden Lagerteilen 9 und 10 ist, wie bereits weiter oben angesprochen, zweckmäßigerweise hierauf abgestimmt.

Ebensowenig wie andere beschriebene Details kann die vorstehende Erläuterung der vorliegenden Erfindung anhand einer Zweiplatten-Spritzgießmaschine als dahingehende Beschränkung interpretiert werden. Insbesondere läßt sich die Erfindung ersichtlich in gleicher Weise bei Dreiplatten-Spritzgießmaschinen anwenden, insbesondere indem die Lagerteile auf Holmen verschiebbar geführt sind und nur ein erstes Klemmelement vorgesehen ist, welches an einer von insgesamt (nur) zwei Zugstangen klemmbar fixierbar ist. Entsprechendes gilt für das ggfs. vorgesehene, mindestens eine dem zweiten Lagerteil zugeordnete zweite Klemmelement.

## Patentansprüche

1. Spritzgießmaschine umfassend eine feststehende (1) und eine in Längsrichtung (A) der Maschine bewegbare (2) Formaufspannplatte, einen zwischen den Formaufspannplatten angeordneten Mittelblock (8) mit einem ersten (9) und einem zweiten (10) in Längsrichtung der Maschine bewegbaren Lagerteil und einem in den beiden Lagerteilen um eine quer zu Längsachse verlaufende Drehachse (11) drehbar gelagerten Werkzeugblock (12), eine auf die bewegbare Formaufspannplatte wirkende Schließeinheit (3), mindestens eine Spritzeinheit und eine die Schließeinheit und die Spritzeinheit steuernde Steuerung,
**dadurch gekennzeichnet,**
**daß** mindestens dem ersten Lagerteil (9) des Mittelblockes (8) mindestens ein von der Steuereinheit betätigbares erstes Klemmelement (15) zugeordnet ist, das in eine Klemmstellung, in der es an einer fest mit der bewegbaren Formaufspannplatte (2) verbundenen, sich in Längsrichtung (A) der Maschine erstreckenden Zugstange (7a) angreift und das erste Lagerteil mit der bewegbaren Formaufspannplatte (2) gekoppelt zusammen mit dieser verfahrbar ist, und in eine Öffnungsstellung, in der die bewegbare Formaufspannplatte bei nicht-bewegtem erstem Lagerteil verfahrbar ist, schaltbar ist.

2. Spritzgießmaschine nach Anspruch 1,
**dadurch gekennzeichnet,**
**daß** mindestens einem Lagerteil (9, 10) ein von der Steuereinheit betätigbares Arretierelement (17, 18) zugeordnet ist, das in eine Sperrstellung, in der das betreffende Lagerteil relativ zu der feststehenden Formaufspannplatte (1) fixiert lagegesichert ist, und in eine Losstellung, in der das betreffende Lagerteil relativ zu der feststehenden Formaufspannplatte bewegbar ist, schaltbar ist.

3. Spritzgießmaschine nach Anspruch 1 oder Anspruch 2, **dadurch gekennzeichnet,**
**daß** die beiden Lagerteile (9, 10) des Mittelblockes (8) unabhängig voneinander verfahrbar sind.

4. Spritzgießmaschine nach Anspruch 3,
**dadurch gekennzeichnet,**
**daß** dem zweiten Lagerteil (10) des Mittelblockes (8) mindestens ein von der Steuereinheit betätigbares zweites Klemmelement (16) zugeordnet ist, das unabhängig von dem mindestens einen ersten Klemmelement (15) in eine Klemmstellung, in der das zweite Lagerteil mit der bewegbaren Formaufspannplatte (2) gekoppelt zusammen mit dieser verfahrbar ist, und in eine Öffnungsstellung, in der die bewegbare Formaufspannplatte bei nicht-bewegtem zweitem Lagerteil verfahrbar ist, schaltbar ist.

5. Spritzgießmaschine nach Anspruch 3 oder Anspruch 4,
**dadurch gekennzeichnet,**
**daß** der Werkzeugblock (12) bei zueinander in Längsrichtung (A) der Maschine versetzt angeordneten Lagerteilen (9, 10) in Richtung seiner Drehachse (11) montierbar und demontierbar ist.

6. Spritzgießmaschine nach einem der Ansprüche 1 bis 5,
**dadurch gekennzeichnet,**
**daß** der Werkzeugblock (12) einen mehrere Formaufspannflächen aufweisenden Werkzeugträger umfaßt.

7. Spritzgießmaschine nach einem der Ansprüche 1 bis 5,
**dadurch gekennzeichnet,**
**daß** die dem Mittelblock (8) zugeordneten Teilwerkzeuge unmittelbar in den Werkzeugblock (12) eingearbeitet sind.

## Claims

1. An injection moulding machine comprising a stationary die platen (1) and a die platen (2) that can be moved in the longitudinal direction (A) of the machine, a center block (8) that is arranged between the die platens and features a first bearing part (9) and a second bearing part (10) that can be moved in the longitudinal direction of the machine, as well as a tool block (12) that is supported in the two bearing parts such that it is pivotable about a rotational axis (11) extending transverse to the longitudinal axis, a clamping unit (3) that acts upon the movable die platen, at least one injection unit and a control that controls the clamping unit and the injection unit,
**characterized in**
**that** at least one first clamping element (15) actuated by the control unit is assigned to at least the first bearing part (9) of the center block (8), wherein said first clamping element can be shifted into a clamping position, in which it engages on a connecting rod (7a) that is rigidly connected to the movable die platen (2) and extends in the longitudinal direction (A) of the machine and in which the first bearing part is coupled to and can be displaced together with the movable die platen (2), and into an open position, in which the movable die platen can be displaced when the first bearing part is not moved.

2. The injection moulding machine according to Claim 1,
**characterized in**
**that** a locking element (17, 18) actuated by the control unit is assigned to at least one bearing part (9, 10), wherein said locking element can be shifted into a locking position, in which the respective bearing part is fixed and secured in position relative to the stationary die platen (1), and into a release position, in which the respective bearing part can be moved relative to the stationary die platen.

3. The injection moulding machine according to Claim 1 or Claim 2,
**characterized in**
**that** the two bearing parts (9, 10) of the center block (8) can be displaced independently of one another.

4. The injection moulding machine according to Claim 3,
**characterized in**
**that** at least one second clamping element (16) actuated by the control unit is assigned to the second bearing part (10) of the center block (8), wherein said second clamping element can be shifted into a clamping position, in which the second bearing part is coupled to and can be displaced together with the movable die platen (2), and into an open position, in which the movable die platen can be displaced when the second bearing part is not moved, independently of the at least one first clamping element (15).

5. The injection moulding machine according to Claim 3 or Claim 4,
**characterized in**
**that** the tool block (12) can be installed and removed in the direction of its rotational axis (11) when the bearing parts (9, 10) are arranged offset relative to one another in the longitudinal direction (A) of the machine.

6. The injection moulding machine according to one of Claims 1 to 5,
**characterized in**
**that** the tool block (12) comprises a tool carrier that features several die clamping surfaces.

7. The injection moulding machine according to one of Claims 1 to 5,
**characterized in**
**that** the partial tools assigned to the center block (8) are machined directly into the tool block (12).

## Revendications

1. Presse d'injection comprenant une plaque stationnaire de bridage du moule (1) et une autre mobile (2) en direction longitudinale de la presse (A), un bloc central (8) disposé entre les plaques de bridage du moule avec un premier (9) et un deuxième élément support (10) mobile en direction longitudinale de la presse et un bloc d'outils (12) mobile dans les deux éléments supports autour d'un axe de rotation (11) s'étendant à la transversale de l'axe longitudinal, un organe de fermeture (3) agissant sur la plaque de bridage mobile du moule, au moins un organe d'injection et une commande pilotant l'organe de fermeture et l'organe d'injection,
**caractérisée en ce**
**qu'**il est associé au moins au premier élément support (9) du bloc central (8) au moins un premier élément de serrage (15) susceptible d'être actionné par l'unité de commande, qui est susceptible d'être manoeuvré dans une position de serrage, dans laquelle il s'engage sur une barre de traction (7a) fixement reliée à la plaque mobile de bridage du moule (2), s'étendant en direction longitudinale (A) de la presse et dans laquelle le premier élément support est déplaçable ensemble avec la plaque de bridage du moule (2) en étant couplé à cette dernière et dans une position d'ouverture, dans laquelle la plaque mobile de bridage du moule est déplaçable, sans que le premier élément support ne soit déplacé.

2. Presse d'injection selon la revendication 1,
**caractérisée en ce**
**qu'**il est associé à au moins un élément support (9, 10) un élément de blocage (17, 18) susceptible d'être actionné par l'unité de commande, qui est susceptible d'être manoeuvré dans une position de fermeture, dans laquelle l'élément support concerné est fixé en étant bloqué dans sa position par rapport à la plaque stationnaire de bridage du moule (1) et dans une position de relâche, dans laquelle l'élément support concerné est mobile par rapport à la plaque stationnaire de bridage de moule.

3. Presse d'injection selon la revendication 1 ou la revendication 2,
**caractérisée en ce**
les deux éléments supports (9, 10) du bloc central (8) sont déplaçables indépendamment l'un de l'autre.

4. Presse d'injection selon la revendication 3,
**caractérisée en ce**
**qu'**il est associé au deuxième élément support (10) du bloc central (8) au moins un deuxième élément de serrage (16) susceptible d'être actionné par l'unité de commande, qui indépendamment de l'au moins un premier élément de serrage (15) est susceptible d'être manoeuvré dans une position de serrage, dans laquelle le deuxième élément support est déplaçable ensemble avec la plaque mobile de bridage du moule (2) en étant couplé à cette dernière et dans une position d'ouverture, dans laquelle la plaque de bridage mobile du moule est déplaçable, sans que le deuxième élément support ne soit déplacé.

5. Presse d'injection selon la revendication 3 ou la revendication 4,
**caractérisée en ce**
lorsque les éléments supports (9, 10) sont disposés en déport mutuel en direction longitudinale (A) de la presse, le bloc d'outils (12) est montable et démontable en direction de son axe de rotation (11).

6. Presse d'injection selon l'une quelconque des revendications 1 à 5,
**caractérisée en ce que**
le bloc d'outils (12) comprend un porte-outil comportant plusieurs surfaces de bridage du moule.

7. Presse d'injection selon l'une quelconque des revendications 1 à 5,
**caractérisée en ce que**
les outils partiels associés au bloc central (8) sont incorporés directement dans le bloc d'outils (12).
